# EUROPÄISCHE PATENTANMELDUNG

(11) **EP 0 855 834 A2**
(43) Veröffentlichungstag der Anmeldung: **29.07.1998**
(21) Anmeldenummer: 98101012.7
(22) Anmeldetag: 21.01.1998
(51) Int. Cl.: H04N 5/76, H04N 7/088

(54) **Verfahren und Anordnung zum automatischen Aufzeichnen von Sendungen auf einer Aufnahmeeinrichtung**

(30) Priorität: 22.01.1997 DE 19702115
(71) Anmelder: SIEMENS AKTIENGESELLSCHAFT, 80333 München (DE)
(72) Erfinder: Hundt, Eckart, Dr., 85540 Haar (DE); Schielein, Michael, 80997 München (DE); Wimmer, Bernhard, 81825 München (DE)

(57) **Zusammenfassung**

Die Erfindung gibt ein Vefahren und eine Anordnung zum automatischen Aufzeichnen von Sendungen an, indem ein Stichwort für die Programmierung eingegeben wird. Mittels elektronisch verfügbarer Dienste (Videotext, Internet) werden eine oder mehrere Sendungen, die mit dem Stichwort assoziiert werden, gefunden und dem Benutzer angeboten.
Mittels der VPS-Zeiten, die automatisch im Videotext gesucht werden, wird die jeweilige Sendung exakt aufgezeichnet.
Mit dem Verfahren wird ein Rechner mit all seinen Möglichkeiten hinsichtlich individueller Konfiguration in die Programmierschnittstelle zur automatischen Aufzeichnung von Sendungen zwischen den Benutzer und das Fernsehsignal integriert. Intelligente Suchmaschinen ermöglichen Kombinationssuchen nach einer oder mehreren gewünschten Sendung(en) mittels Standardsoftware auf dem Rechner.
Als Aufnahmeeinrichtung können ein MPEG-Encoder mit Massenspeicher oder ein herkömmlicher Videorecorder, der via Rechner (z.B. RS232-Schnittstelle) gesteuert wird, dienen.

## Beschreibung

Die Erfindung betrifft ein Verfahren und eine Anordnung zum automatischen Aufzeichnen von Sendungen auf einer Aufnahmeeinrichtung.

Zur Erprobung breitbandiger Netze (ATM) werden weltweit Versuchsnetze aufgebaut, die den Teilnehmern verschiedene Dienste anbieten, u.a. auch Video on Demand (VoD). Im Zuge von Multimedia und der globalen Vernetzung kann ein Rechner als Programmierschnittstelle zum automatischen Aufzeichnen von Sendungen verwendet werden.

Aus **[1]** sind ein System und eine Anordnung für eine selektive Aufnahme von Nachrichtensendungen auf einem Videorecorder bekannt, wobei der jeweiligen Nachrichtensendung ein Signal vorausgeht, das Information über die nachfolgende Nachrichtensendung enthält und eine Aufnahme dieser Nachrichtensendung dann durchgeführt wird, wenn die Information einer vom Benutzer getroffenen Vorgabe entspricht. Dabei ist es von Nachteil, daß ausschließlich mit der Sendung auf einer Leitung verknüpfte Daten genutzt werden können, die zusätzlich in einer direkten zeitlichen Beziehung zu der aufzunehmenden Sendung stehen.

Die **Aufgabe** des erfindungsgemäßen Verfahrens besteht darin, die Programmierung zum automatischen Aufzeichnen von Sendungen komfortabel, intuitiv und fehlerunempfindlich zu gestalten, wobei oben beschriebene Nachteile vermieden werden.

Diese Aufgabe wird gemäß den Merkmalen der unabhängigen Patentansprüche gelöst.

Durch den Rechner wird dem Benutzer eine komfortable Eingabeschnittstelle bereitgestellt. Diese Eingabeschnittstelle kann gemäß der unten beschriebenen erfindungsgemäßen Anordnung zum automatischen Aufzeichnen von beispielsweise Fernsehsendungen benutzt werden. Der Benutzer hat somit die Möglichkeit, einen beliebigen Begriff, den er mit der aufzunehmenden Sendung assoziiert, oder aber den Titel der Sendung über die Tastatur einzugeben. Über den Rechner als Schnittstelle zur Programmierung kann beispielsweise der Titel direkt im Videotext gesucht werden. Dabei können auch, je nach Videotextangebot, mehrere Tage durchsucht werden. Aus dem Videotext können ohne Fehlerquelle bei der Eingabe der Programmierdaten durch den Benutzer die VPS-Zeiten ermittelt werden.

Weiterhin ist es vorteilhaft, wenn der Benutzer den Titel der aufzunehmenden Sendung, eine Kennung, die angibt, ob die Sendung einmal oder regelmäßig aufgenommen werden soll und optional noch eine Uhrzeit zu der normalerweise die Sendung beginnt, angibt.

Auch ist es vorteilhaft, wenn statt des Videotext oder zusätzlich zum Videotext ein weiterer elektronischer Dienst wie z.B. das Internet benutzt wird, um die Eingabe des Benutzers so vollständig wie möglich auszuwerten. Hierzu kann eine Suchmaschine eingesetzt werden, die aus der Eingabe des Benutzers versucht, eine oder mehrere passende Sendungen zu finden. So kann nicht nur der Titel als Eingabe für die Programmierung einer oder mehrerer Sendungen dienen, sondern beispielsweise auch Sachgebiete oder Ausschlußkriterien. Durch die Verwendung des Rechners werden Möglichkeiten einer intelligenten Suche und/oder einer lexikalischen Analyse, wie sie von für den Rechner erhältlicher Standardsoftware zur Verfügung gestellt werden, bei der Programmierung zum automatischen Aufzeichnen von Sendungen erschlossen.

Somit kann der Rechner gemäß einer vorhandenen Konfiguration in die Fernsehschnittstelle zwischen Fernsehsignal und Benutzer integriert werden. Der Benutzer bedient sich der in immer mehr Haushalten vorhandenen Ausrüstung, dem Rechner, die ihm eine intelligente fehlerunempfindliche Programmierschnittstelle zum automatischen Aufzeichnen von Sendungen zur Verfügung stellt. Somit kann ein flexibel auf den Benutzer und dessen Anforderungen spezifizierbarer Rechner an einer bislang rudimentären, vom Hersteller des Aufzeichnungsgerätes festgelegten, unflexiblen Programmierschnittstelle eingesetzt werden. Es kann dem Benutzer darüber hinaus die Möglichkeit geboten werden, über ein Programminterface (API = Application Programming Interface) die Schnittstelle zur automatischen Programmierung selbst anzupassen. Beispielsweise kann er auf dem Rechner spezielle Masken entwerfen, die seine Anforderungen hinsichtlich Programmierung und Vorliebe für Sendungen widerspiegeln und in Kombination mit der Suchmaschine für den Benutzer ein hohes Maß an Komfort bieten.

Speziell bei der Benutzung des Videotextes ist es vorteilhaft, die enthaltene VPS-Information zu nutzen, um daraus eine genaue Startzeit und eine genaue Endzeit für die Aufnahme zu ermitteln.

Es kann auch vorteilhaft sein, zusätzlich beispielsweise im Internet das Fernsehprogramm thematisch nach vorgebbaren Präferenzen zu durchsuchen, um nach erfolgreich beendeter Suche die letztendlich zu programmierenden Zeiten im jeweiligen VPS-Signal zu finden. Der Kombination von multimedialen Diensten bei der Suche nach der/den Sendung(en) ist dabei keine Grenze gesetzt.

Es ist vorteilhaft, zur Durchführung des erfindungsgemäßen Verfahrens eine Anordnung zu verwenden, die aus einem Rechner besteht, der die Fernsehinformation in einem TV-Tuner verarbeiten kann und über ein Mittel zur Speicherung der Fernsehinformation verfügt. Der TV-Tuner kann einen Videotext-Decoder enthalten. Weiterhin kann das VPS-Signal der Anordnung zugänglich gemacht werden. Das Mittel zum Speichern der Sendung kann ausgeführt sein als Encoder nach dem MPEG- oder einem anderen Codierverfahren in dem Rechner selbst, wobei ein entsprechender Massenspeicher bereitgestellt wird oder als Videorecorder, der über eine Schnittstelle vom Rechner aus gesteuert wird und die Sendung auf einer Videokassette abspeichert.

Weiterbildungen des erfindungsgemäßen Verfahrens ergeben sich aus den abhängigen Ansprüchen.

Die Erfindung wird anhand eines Ausführungsbeispiels, das in den Figuren dargestellt ist, weiter erläutert.

Es zeigen
- Fig.1: ein Blockdiagramm, das die logischen Bestandteile des erfindungsgemäßen Verfahrens enthält und
- Fig.2: eine Anordnung zur Durchführung des erfindungsgemäßen Verfahrens.

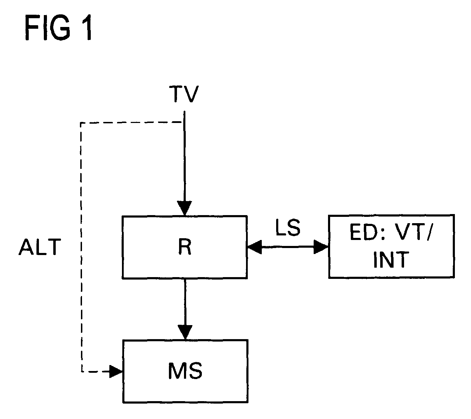

In **Fig.1** wird ein Rechner R als integrierte Programmierschnittstelle zum automatischen Aufzeichnen von Fernsehsendungen dargestellt. Hierbei sei angemerkt, daß im folgenden beispielhaft von einem MPEG-Encoder ausgegangen wird. Es sind genauso andere Kompressionsverfahren, wie z.B. H.263 oder JPEG, anwendbar. Der Rechner R steuert ein Mittel zum Speichern der Sendung MS, das ausgeführt ist entweder als MPEG-Encoder mit einem Speichermedium zum Abspeichern der Sendung oder als ein Videorecorder, der über eine Schnittstelle vom Rechner aus angesteuert wird und die Sendung auf einer Videocassette abspeichert. Bei dieser zweiten Möglichkeit gelangt das Fernsehsignal TV direkt zum Videorecorder (siehe Weg ALT in Fig.1).
Ansonsten gelangt das Fernsehsignal TV in den Rechner, der die in dem Fernsehsignal TV enthaltenen Signale für Videotext VT und ein VPS-Signal extrahiert. Über eine logische Schnittstelle LS zu einem Block elektronischer Dienste ED erhält der Rechner R Zugriff auf Informationsdatenbanken wie den Videotext VT und/oder das Internet INT. Über eine logische Schnittstelle LS sind beliebige Suchanfragen möglich. Um eine möglichst exakte Aufnahme zu erzielen, wird das VPS-Signal ausgewertet. Somit wird nach jeder erfolgreich beendeten Suche im Videotext nach den VPS-Zeiten gesucht. Es ist auch möglich, auf die VPS-Zeiten zu verzichten und nur Start und Ende der aufzunehmenden Sendung zu programmieren, ohne Berücksichtigung des VPS-Signals. Ist die Programmierung zum automatischen Aufzeichnen von Fernsehsendungen erfolgt, so wird bei Start der jeweiligen Sendung diese auf dem Mittel zur Speicherung der Sendung MS abgelegt.

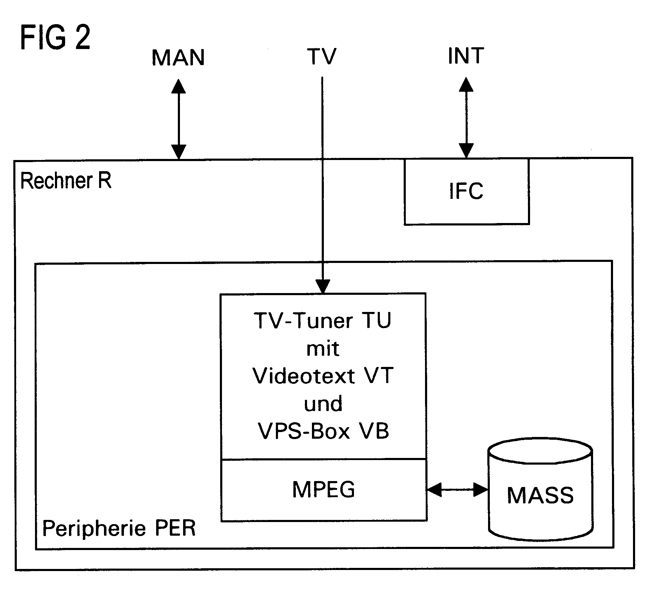

**Fig.2** zeigt eine Anordnung zur Durchführung des erfindungsgemäßen Verfahrens. Der Rechner R wird ergänzt um eine Peripherie PER. Die Videoinformation TV wird in einen TV-Tuner TU gespeist, der einen Videotext-Decoder VD und eine VPS-Box VB zur Entschlüsselung des VPS-Signals enthält. Eine weitere Komponente der Peripherie ist ein MPEG-Encoder MPEG, der eine Schnittstelle zu einem Massenspeicher MASS, der optional auch extern angeordnet sein kann, besitzt. Weiterhin verfügt der Rechner über eine Schnittstelle IFC zum Internet INT. Im Internet INT können Informationen über Sendungen bei Fernsehprogrammprovidern abgerufen werden. Die hier vorhandenen Hintergrundinformationen über Filme können Suchmaschinen auf dem Rechner R zugänglich gemacht werden. Auf der Suche nach einer Sendung gibt ein Benutzer MAN ein Stichwort ein, über Internet INT werden die Hintergrundinformationen bezüglich dieses Stichwortes durchsucht und die gefundenen Einträge mit Titel, Start- und Stop-Zeiten und möglicherweise einer kurzen inhaltlichen Zusammenfassung an den Benutzer MAN zurückgeliefert. Auf dem Rechner R entscheidet der Benutzer MAN lokal, ob eine der gefundenen Sendungen seinen Wünschen entspricht und wenn dies der Fall ist, wird mit der Information über die aufzunehmende Sendung im Videotext VT des jeweiligen Programms nach den VPS-Zeiten gesucht. Die gefundene Information über die aufzunehmende Sendung wird in einer Datei abgelegt und die Aufnahme beginnt automatisch, sobald die Sendung beginnt. Ist kein VPS-Signal verfügbar, so beginnt die Aufnahme zu den vorgegebenen Zeiten ohne Synchronisation durch das VPS-Signal.

### Literatur:

[1] WO 96/13934 A1

## Patentansprüche

1. Verfahren zum automatischen Aufzeichnen einer Sendung, auf einer Aufnahmeeinrichtung
a) bei dem die Sendung über einen ersten Kanal empfangen wird,
b) bei dem über eine Programmierschnittstelle der Aufnahmeeinrichtung ein Begriff, der mit einer aufzunehmenden Sendung assoziiert ist, mitgeteilt wird,
c) bei dem durch einen über einen zweiten Kanal verfügbaren elektronischen Dienst eine Zuordnung des Begriffs zu mindestens einer Sendung vorgenommen wird,
d) bei dem Daten für eine Programmierung der Sendung entsprechend der Zuordnung von dem elektronischen Dienst übermittelt werden und
e) bei dem die Aufnahmeeinrichtung mit den übermittelten Daten programmiert wird.

2. Verfahren nach Anspruch 1,
bei dem der Begriff der Titel der aufzunehmenden Sendung ist.

3. Verfahren nach Anspruch 1,
bei dem der Begriff eine oder mehrere der folgenden Komponenten umfaßt:
a) ein Titel der aufzunehmenden Sendung,
b) eine Kennung, die angibt, ob die Sendung einmalig oder regelmäßig aufgenommen werden soll und
c) eine Uhrzeit, zu der normalerweise die Sendung beginnt.

4. Verfahren nach einem der vorhergehenden Ansprüche,
bei dem der elektronische Dienst dargestellt wird durch Videotext und/oder Internet.

5. Verfahren nach einem der vorhergehenden Ansprüche,
bei dem anhand des elektronischen Dienstes der Begriff mit mindestens einer Sendung assoziiert wird.

6. Verfahren nach einem der vorhergehenden Ansprüche,
bei dem zum automatischen Aufzeichnen der Sendung ein VPS-Signal verwendet wird.

7. Anordnung zum automatischen Aufzeichnen einer Sendung,
bei der ein Rechner derart eingerichtet ist, daß
a) die Sendung über einen ersten Kanal empfangen wird,
b) über eine Programmierschnittstelle der Aufnahmeeinrichtung ein Begriff, der mit einer aufzunehmenden Sendung assoziiert ist, mitgeteilt wird,
c) durch einen über einen zweiten Kanal verfügbaren elektronischen Dienst eine Zuordnung des Begriffs zu mindestens einer Sendung vorgenommen wird,
d) Daten für eine Programmierung der Sendung entsprechend der Zuordnung von dem elektronischen Dienst übermittelt werden und
e) die Aufnahmeeinrichtung mit den übermittelten Daten programmiert wird.

8. Anordnung nach Anspruch 7,
bei der ein Mittel zum Speichern der Sendung ein MPEG-Encoder ist.

9. Anordnung nach Anspruch 7,
bei der ein Mittel zum Speichern der Sendung ein Videorecorder ist, wobei der Videorecorder über eine Schnittstelle von dem Rechner steuerbar ausgeführt ist.
